# EUROPÄISCHE PATENTSCHRIFT

(11) **EP 1 826 033 B1**
(45) Veröffentlichungstag und Bekanntmachung des Hinweises auf die Patenterteilung: **02.07.2008**
(21) Anmeldenummer: 07002017.7
(22) Anmeldetag: 31.01.2007
(51) Int. Cl.: B60D 1/54

(54) **Anhängerkupplung für Kraftfahrzeuge**
Trailer hitch for motor vehicles
Dispositif d'attelage pour véhicules automobiles

(30) Priorität: 27.02.2006 DE 102006008837
(43) Veröffentlichungstag der Anmeldung: 29.08.2007
(60) Teilanmeldung: 08008400.7
(73) Patentinhaber: WESTFALIA - Automotive GmbH, 33378 Rheda-Wiedenbrück (DE)
(72) Erfinder: Drücker, Michael, 33334 Gütersloh (DE)
(74) Vertreter: Bregenzer, Michael

(56) Entgegenhaltungen:
- EP-A- 1 475 253
- EP-A- 1 637 364
- EP-A1- 1 400 379
- EP-A1- 1 504 928
- EP-B1- 1 428 697

## Beschreibung

Die Erfindung betrifft eine Anhängerkupplung für ein Kraftfahrzeug mit einem Kupplungsarm, der an seinem freien Ende ein Kopfstück zum lösbaren Befestigen eines Anhängers trägt und einen Lagerkopf aufweist, der an einem an dem Kraftfahrzeug befestigbaren oder befestigten Schwenk-Halter um eine Schwenkachse schwenkbar zwischen einer Ruhestellung und einer Arbeitsstellung gelagert ist, bei der der Kupplungsarm nach hinten vor das Kraftfahrzeug zum Anhängen des Anhängers vorsteht, wobei der Kupplungsarm zumindest in der Arbeitsstellung bezüglich des Halters mittels Formschlusskonturen an dem Halter und an dem Kupplungsarm drehfest festlegbar ist, wobei der Kupplungsarm in Richtung der Schwenkachse axial verschieblich ist, um die Formschlusskonturen außer Eingriff oder in Eingriff zu bringen.

Eine solche Anhängerkupplung ist beispielsweise aus der gattungsbildenden europäischen Patentschrift EP 1 428 697 B1 bekannt. Der schwenkbare Kupplungsarm ist mittels Formschlusskonturen in der Arbeitsstellung und der Ruhestellung festlegbar. Die Formschlusskonturen sind beispielsweise Kalotten an dem Halter, in die Kugeln an dem Lagerkopf des Kupplungsarmes eingreifen und umgekehrt. Eine Verriegelungsanordnung der bekannten Anhängerkupplung führt bei einem Entriegeln des Kupplungsarmes eine axiale Zwangsverschiebung im Sinne eines Entfernens der Formschlusskonturen voneinander durch. Durch Korrosion oder sonstige Umwelteinflüsse ist es aber möglich, dass die Formschlusskonturen verhältnismäßig fest aneinander haften, so dass die Verriegelungsanordnung durch die Ablöseoperation mechanisch stark belastet wird.

Ferner sollen die Formschlusskonturen außerhalb der Arbeitsstellung und der Ruhestellung während eines Schwenkens außer Eingriff, das heißt voneinander beabstandet sein. Zu diesem Zweck sieht die EP 1 428 697 B1 vor, dass im Bereich der Formschlusskonturen bzw. einer Fläche, an der die Formschlusskonturen angeordnet sind, ein Distanzhalterelement vorhanden ist. Das Distanzhalterelement ist durch einen Bolzen gebildet, der in der Arbeitsstellung und in der Ruhestellung in eine Ausnehmung eingreift, ansonsten aber die Formschlusskonturen auf Distanz hält. Das bekannte Distanzhalterelement ist an seinem vorderen Ende kugelförmig und greift in eine entsprechend kugelförmige Kalotte ein. Somit müssen die zum Entfernen der Formschlusskonturen erforderlichen Kräfte jedenfalls durch die Verriegelungsanordnung, die eine Entriegelungsfunktion aufweist, aufgebracht werden.

Es ist daher die Aufgabe der vorliegenden Erfindung, bei einer Anhängerkupplung der eingangs genannten Art Mittel bereitzustellen, die die Formschlusskonturen bei einem Schwenken aus der Arbeitsstellung oder der Ruhestellung durch eine Relativverschiebung parallel zu der Schwenkachse im Sinne eines Entfernens außer Eingriff bringt und/oder zumindest außerhalb der Arbeitsstellung, zweckmäßigerweise auch außerhalb der Ruhestellung, außer Eingriff hält.

Zur Lösung der Aufgabe weist eine Anhängerkupplung der eingangs genannten Art eine Führungsanordnung mit einer Führungskulisse mit mindestens einer sich in Schwenkrichtung erstreckenden und bezüglich der Formschlusskonturen abschnittsweise schräg verlaufenden Führungsbahn und mindestens ein Führungselement auf, das auf der mindestens einen Führungsbahn entlang gleitet, um die Formschlusskonturen bei einem Schwenken aus der Arbeitsstellung und/oder aus der Ruhestellung durch eine Relativverschiebung parallel zu der Schwenkachse im Sinne eines Entfernens der Formschlusskonturen außer Eingriff zu bringen und/oder außerhalb zumindest der Arbeitsstellung außer Eingriff zu halten.

Die erfindungsgemäße Führungsbahn bildet sozusagen eine Ausrückkontur, die ein Ausrücken der Formschlusskonturen unterstützt. Ferner kann die Führungsbahn eine Haltekontur sein, die die Formschlusskonturen außer Eingriff hält, solange nicht die Arbeitsstellung oder die Ruhestellung erreicht ist. Die Führungsbahn kann orthogonal oder auch schräg zur Schwenkachse verlaufen. Die schrägen Abschnitte oder Rampen der Führungsbahn schaffen einen kontinuierlichen, gleichmäßigen Übergang zwischen einer Lage, bei der die Formschlusskonturen in Eingriff sind und einer Lage, bei der die Formschlusskonturen außer Eingriff sind oder außer Eingriff gehalten werden. Die Führungsanordnung führt zweckmäßigerweise den Lagerkopf bei einem Schwenken aus der Arbeitsstellung oder aus der Ruhestellung relativ zu dem Halter.

Bei einer Ausgestaltung der Erfindung, bei der die Formschlusskonturen des Halters relativ zu dem Kupplungsarm bzw. zu dem Lagerkopf des Kupplungsarmes beweglich sind, kann die Führungsanordnung auch dafür vorgesehen sein, die Formschlusskonturen des Halters relativ zu denen des Kupplungsarmes zu führen.

Die Führungsbahn ist zweckmäßigerweise zumindest abschnittsweise gekrümmt. Diese Krümmungen sind beispielsweise in Übergangsbereichen zwischen schrägen und ebenen Abschnitten der Führungsbahn vorgesehen. Dies trägt zu einem kontinuierlichen, gleichmäßigen Verlauf der Führungsbewegung bei.

Die erfindungsgemäße Führungsanordnung bildet sozusagen ein Gleitgetriebe, das bei einer Schwenkbewegung des Kupplungsarms gleichzeitig eine axiale Verstellung des Kupplungsarms und des Halters relativ zueinander bewirkt.

Die Führungsanordnung weist mindestens eine Einrückkontur auf, die der Arbeitsstellung oder der Ruhestellung zugeordnet ist. Zweckmäßigerweise ist beiden Stellungen eine Einrückkontur zugeordnet. An der Führungskontur gleitet eine Führungsgleitfläche bei einer Schwenkbewegung des Kupplungsarmes entlang und bewirkt bei einem Schwenken des Kupplungsarms in die Arbeitstellung bzw. die Ruhestellung eine Axialverschiebung des Kupplungsarms derart, dass die Formschlusskonturen in Eingriff gelangen. Dieses In-Eingriff-Gelangen wird zwar zweckmäßigerweise auch durch eine Verriegelungsanordnung zum Verriegeln des Kupplungsarms an dem Halter bewirkt. Die Einrückkontur oder die Einrückkonturen unterstützen jedoch das Einrücken, so dass die Belastung der Verriegelungsanordnung verringert ist, insbesondere wenn ein Bediener die Anhängerkupplung mit verhältnismäßig großer Kraft betätigt.

Die Führungsgleitfläche ist zweckmäßigerweise an dem Führungselement angeordnet. Die mindestens eine Einrückkontur ist vorteilhaft eine Fläche der Führungskulisse, die der mindestens einen Führungsbahn gegenüberliegt. Die die Einrückkontur bildende Fläche kann eine von der Führungskulisse separate Einrück-Fläche sein oder, was besonders bevorzugt ist, einen Bestandteil der Führungskulisse bilden.

Vorteilhafterweise ist an mindestens einen Endbereich der Führungskulisse ein Drehanschlag zum Begrenzen einer Schwenkbewegung des Kupplungsarm bei einem Schwenken in die Arbeitstellung und/oder die Ruhestellung vorhanden. Es versteht sich, dass auch ein von der Führungskulisse separater Drehanschlag vorhanden sein kann. Die Führungskulisse ist bei mindestens einem Drehanschlag maulartig ausgestaltet. Dort ist beispielsweise eine maulartige oder U-förmige Aufnahme vorhanden, wobei Innenflächen dieser Aufnahme die Führungsbahn, der Drehendanschlag sowie die Einrück-Fläche bilden.

Zweckmäßigerweise ist mindestens ein mittlerer Abschnitt der Führungsbahn relativ zu den Formschlusskonturen des Halters oder des Kupplungsarms erhöht. Wenn die Führungsbahn an dem Halter vorgesehen ist, ist der Abstand des mittleren Abschnittes zu dessen Formschlusskonturen größer als im Bereich der Arbeitsstellung oder der Ruhestellung. Wenn die Führungsbahn an dem Kupplungsarm, insbesondere dem Lagerkopf, angeordnet ist, ist der Abstand des mittleren Abschnittes zu den Formschlusskonturen des Kupplungsarms kleiner als im Bereich der Arbeits- oder der Ruhestellung.

Die Führungskulisse ist in einer besonders bevorzugten Ausführungsform an dem Halter und das mindestens eine Führungselement an dem Lagerkopf des Kupplungsarms angeordnet, der an dem Halter drehbar gelagert ist. Auch die umgekehrte Bauweise ist möglich, das heißt dass die Führungskulisse an dem Lagerkopf und das Führungselement an dem Halter angeordnet ist. Ferner ist eine Kombination beider Varianten möglich, wenn mehrere Führungskulissen und Führungselemente vorgesehen sind.

Es ist zwar möglich, dass das mindestens eine Führungselement durch eine vorteilhaft einstückige Gleitfläche an dem Kupplungsarm oder dem Halter gebildet ist. Zweckmäßigerweise ist das mindestens eine Führungselement aber durch einen Bolzen gebildet, der an dem Lagerkopf oder an dem Halter quer zu der Schwenkachse festgelegt ist. Der Bolzen steht beispielsweise senkrecht zur Schwenkachse oder, wenn die Führungsbahn schräg verläuft, schräg zur Schwenkachse.

Zweckmäßigerweise steht ein Ende des Bolzens vor den Lagerkopf vor und bildet einen Mitnehmer für ein schwenkbares Anbauteil der Anhängerkupplung. Diese Anbauteil ist beispielsweise eine schwenkbare elektrische Steckkontaktanordnung, eine Abdeckung für eine Steckkontaktanordnung oder dergleichen. Der Mitnehmer nimmt bei einer Schwenkbewegung des Kupplungsarms das Anbauteil in Richtung der Arbeitsstellung oder in Richtung der Ruhestellung mit.

Eine besonders bevorzugte Ausführungsform der Erfindung sieht vor, dass die Führungsanordnung durch den Lagerkopf verdeckt ist. Der Lagerkopf bildet eine Art Hülse oder einen Überwurf über die Führungsanordnung, so dass diese vor Umwelteinflüssen geschützt ist. Der Lagerkopf ist zum Beispiel konisch. Ein Abschnitt mit einem größeren Durchmesser verdeckt vorteilhaft die Führungsanordnung.

Es stellt an sich bereits eine eigenständige Erfindung dar, wenn bei einer Anhängerkupplung der eingangs genannten Art eine Einrückkontur in der Art der Einrückkontur gemäß Anspruch 4 vorhanden ist, die ein Einrücken der Formschlusskonturen in Richtung eines Formschlusses unterstützt und zudem durch den Lagerkopf verdeckt ist. Es ist dann nicht zwingend erforderlich, dass dann zusätzlich eine Führungsbahn gemäß den kennzeichnenden Merkmalen des Anspruches 1 vorhanden ist.

Ferner ist vorteilhaft eine Dichtungsanordnung vorhanden, die die Führungsanordnung, insbesondere die Führungskulisse, gegenüber Umwelteinflüssen abdichtet. Die Dichtungsanordnung kann in der Arbeitsstellung und/oder der Ruhestellung wirksam sein. Die Dichtungsanordnung enthält beispielsweise einen Dichtungsring, der zwischen dem Lagerkopf und einer Fläche des Halters an einer Stirnseite des Lagerkopfs angeordnet ist. In dem durch den Lagerkopf und die Dichtungsanordnung geschützten Bereich ist die Führungsanordnung, insbesondere die Führungskulisse, angeordnet.

Vorteilhafterweise wird die Führungsanordnung durch Bauteile gebildet, die von einer Verriegelungsanordnung zum drehfesten und/oder axialen Verriegeln des Kupplungsarms an dem Halter zumindest in der Arbeitsstellung separat ist. Es versteht sich, dass die Führungskulisse auch einen Bestandteil einer Verriegelungsanordnung bilden kann, das heißt in diese integriert sein kann.

Eine vorteilhafte Variante der Erfindung sieht vor, dass die Führungsbahn an einer Welle angeordnet ist, an der der Lagerkopf des Kupplungsarms drehbar gelagert ist. Die Führungsbahn ist beispielsweise an einer Stirnseite oder an einem Außenumfang eines Flansches der Welle angeordnet. Der Flansch ist beispielsweise ein Befestigungsflansch, mit dem die Welle an einer fahrzeugfesten Halterplatte oder einem sonstigen Halterteil befestigt ist, wobei die Halterplatte ihrerseits wieder an dem Fahrzeug befestigt ist oder befestigbar ist. Die Halterplatte wir beispielsweise durch einen Anbauflansch gebildet.

Die Welle, an der die Führungsbahn angeordnet ist, ist zweckmäßigerweise eine Hohlwelle, in der die Verriegelungsanordnung zum Verriegeln des Kupplungsarms zumindest teilweise aufgenommen ist. Die Hohlwelle weist vorteilhaft radiale Führungskanäle auf, in denen Verriegelungselemente verschieblich sind. Die Verriegelungselemente sind beispielsweise Kugeln, Bolzen oder dergleichen. In der Hohlwelle ist ein Verriegelungsbolzen längsverschieblich gelagert, der die Verriegelungselemente nach radial außen in Verriegelungsaufnahmen an dem Kupplungsarm bzw. an dem Lagerkopf verdrängt, so dass der Lagerkopf bzw. der Kupplungsarm an dem Halter verriegelt ist.

Die an der Welle vorgesehene Führungsbahn kann mit hoher Präzision hergestellt werden, so dass eine exakte axiale Verschiebe-Führung des Kupplungsarms und des Halters relativ zueinander möglich ist.

Vorteilhaft hält eine Federanordnung das mindestens eine Führungselement in Kontakt mit der mindestens einen Führungsbahn. Die Federanordnung kann ein Bestandteil der Verriegelungsanordnung oder davon separat sein. Die Federanordnung bewirkt z.B. ein Verspannen der Formschlusskonturen gegeneinander.

Nachfolgend wird ein Ausführungsbeispiel der Erfindung anhand der Zeichnung vorgestellt. Es zeigen:
- Figur 1: eine Seitenansicht einer an einem hinteren Träger eines Kraftfahrzeugs montierten schwenkbaren Anhängerkupplung,

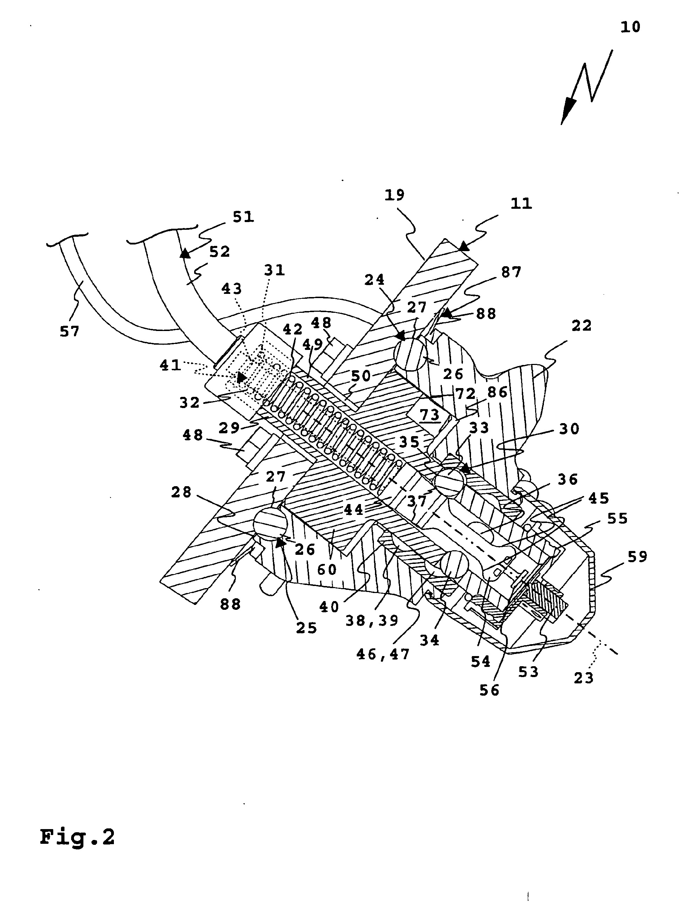

- Figur 2: eine Querschnittsansicht der Anhängerkupplung gemäß Figur 1 entlang einer Linie S-S in Figur 1,

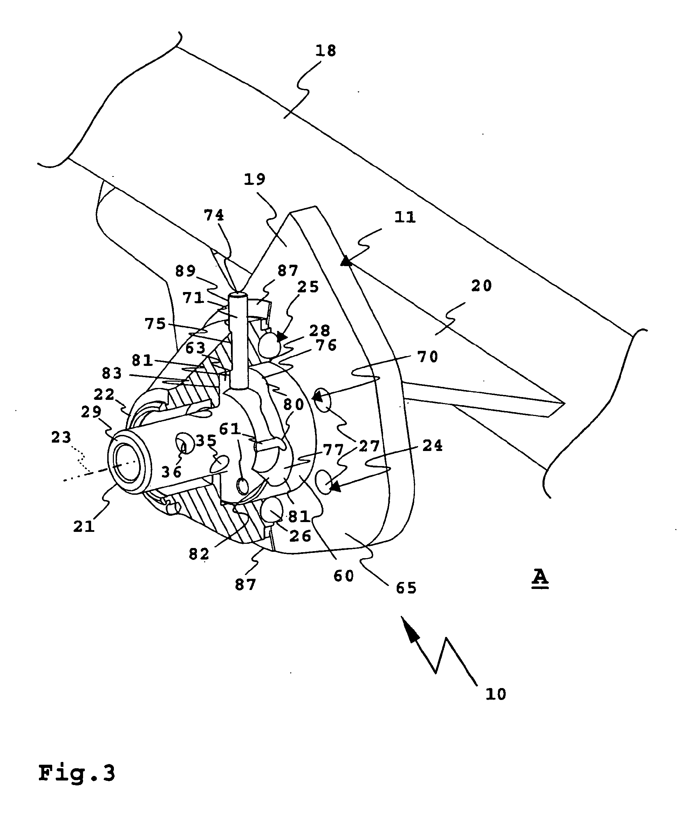

- Figur 3: eine perspektivische Schrägansicht der Anhängerkupplung gemäß Figuren 1, 2 in Arbeitsstellung, wobei Teile der Anhängerkupplung weggelassen sind und ein Lagerkopf geschnitten ist,
- Figur 4: eine Schrägansicht der Anhängerkupplung etwa entsprechend Figur 3, wobei die Anhängerkupplung in einer Zwischenstellung zwischen der Arbeitsstellung und einer Ruhestellung ist, und

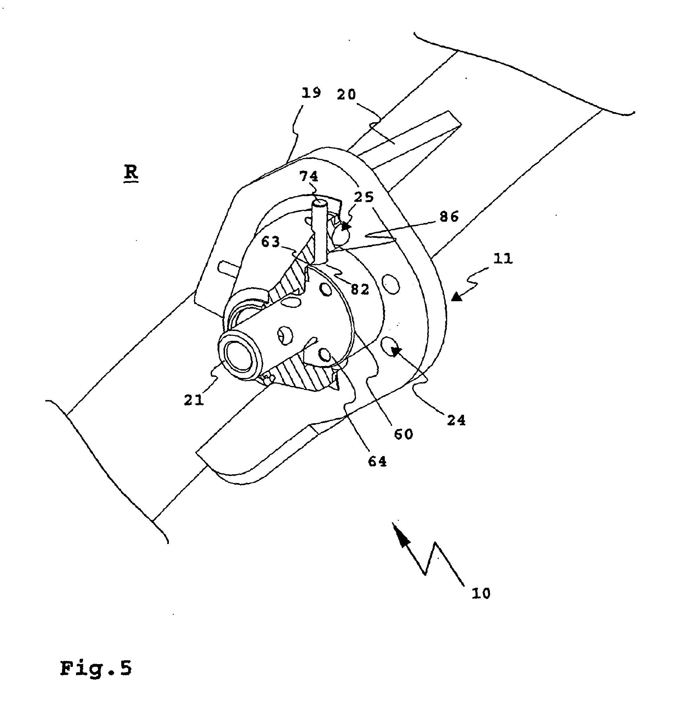

- Figur 5: eine perspektivische Schrägansicht der Anhängerkupplung etwa entsprechend Figuren 3, 4, wobei die Anhängerkupplung in einer Ruhestellung steht.

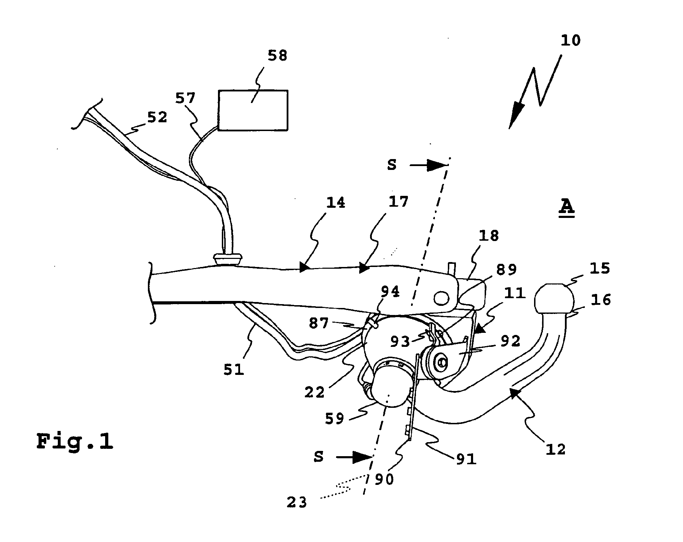

Ein Kupplungsarm 12 einer Anhängerkupplung 10 für ein Kraftfahrzeug 14, z.B. einen Personenkraftwagen, ist an einem Halter 11 zwischen einer Ruhestellung R und einer Arbeitsstellung A schwenkbar gelagert. In der Arbeitsstellung A (siehe Figur 1) steht der Kupplungsarm 12 nach hinten vor das Kraftfahrzeug 14 vor, so dass ein nicht dargestellter Anhänger an ein Kopfstück 15 an einem freien Ende 16 des Kupplungsarms 12 befestigbar ist.

Der Halter 11 ist an einer Karosserie 17 des Kraftfahrzeugs 14 befestigt, beispielsweise an einem hinteren Querträger 18. Beispielsweise ist eine Halteplatte 19 mittels eines vorteilhaft plattenartigen Stützteils 20 an dem Querträger 18 befestigt, beispielsweise angeschweißt oder angeschraubt. Die Halteplatte 19 bildet einen Träger für eine Welle 21, an der ein Lagerkopf 22 des Kupplungsarms 12 schwenkbar gelagert ist. Die Welle 21 definiert eine Schwenkachse, um die der Kupplungsarm 12 schwenkbar ist. Die Schwenkachse 23 steht vorliegend schräg nach unten, so dass der Kupplungsarm 12 in seiner Ruhestellung R eine in der Figur nicht dargestellte verdeckte Lage unterhalb des Kraftfahrzeugs 14 oder hinter einem nicht dargestellten Stoßfänger des Kraftfahrzeugs 14 einnehmen kann.

Die Anhängerkupplung 10 ist manuell betätigbar, wobei eine motorische Betätigung, beispielsweise mittels eines elektrischen Antriebs, denkbar ist.

Der Lagerkopf 22 und somit der Kupplungsarm 12 ist bezüglich der Schwenkachse 23 an der Welle 21 axial verschieblich, so dass Formschlusskonturen 24, 25 an dem Kupplungsarm 12 und dem Halter 11 in der Arbeitsstellung A und der Ruhestellung R jeweils in Eingriff gelangen und den Kupplungsarm 12 an dem Halter 11 drehfest in den beiden Stellungen halten können. Durch eine axiale Relativverschiebung des Kupplungsarms 12 und des Halters 11 voneinander weg parallel zur Schwenkachse 23 gelangen die Formschlusskonturen 24, 25 außer Eingriff, so dass der Kupplungsarm 12 an dem Halter 11 drehbar bzw. schwenkbar ist.

Die Formschlusskonturen 24 sind an dem Halter 11, die Formschlusskonturen 25 an dem Kupplungsarm 12 angeordnet. Die Formschlusskonturen 25 enthalten Kugeln 26, die in korrespondierende, zweckmäßigerweise kalottenförmige Aufnahmen 27 der Formschlusskonturen 24 jeweils in der Arbeitsstellung A und der Ruhestellung R eingreifen. Es versteht sich, dass z.B. auch Zahnungen, Riffelungen, zylindrische Vorsprünge, z.B. Bolzen, die in korrespondierende Ausnehmungen eingreifen, oder sonstige Formschlusskonturen möglich sind. Die Formschlusskonturen 25 sind an einer Stirnseite 28 des Lagerkopfs 22, die Formschlusskonturen 24, 25 an einer Fläche 65 des Halters 11, die der Stirnseite 28 gegenüberliegt.

Eine Verriegelungsanordnung 30 dient zum Verriegeln des Kupplungsarms 12 an dem Halter 11. Die Verriegelungsanordnung 30 ist im Wesentlichen innerhalb der Welle 21 angeordnet, die als eine Hohlwelle 29 ausgestaltet ist. In diesem Zusammenhang sei betont, dass auch außenseitige Verriegelungsanordnungen, die beispielsweise von außen auf den Lagerkopf 22 wirken, prinzipiell denkbar sind.

Ein Verriegelungsbolzen 31 der Verriegelungsanordnung 30 ist in einem Führungskanal 32, beispielsweise einer Durchgangsbohrung im Innern der Hohlwelle 29, längsverschieblich gelagert. Der Verriegelungsbolzen 31 dient zur radialen Längsverlagerung von Verriegelungselemente 33 sowie Entriegelungselementen 34, die in radialen Führungskanälen 35, 36 der Holwelle 29 verschieblich oder verlagerbar angeordnet sind. Die Elemente 33, 34 sind vorliegend Kugeln, wobei auch Bolzen, Walzen oder dergleichen denkbar sind.

Schrägflächen 37 am Verriegelungsbolzen 31 verdrängen die Verriegelungselemente 33 nach radial außen in eine Verriegelungsaufnahme 38 an dem Kupplungsarm 12, beispielsweise dem Lagerkopf 22. Die Verriegelungsaufnahme 38 ist beispielsweise eine Ring-Rille oder Ringnut 39 an dem Lagerkopf 22 und ist beispielsweise an einem Lagerring 40 ausgebildet. Die Schrägflächen 37 weisen eine selbsthemmende Neigung auf, so dass eine von den Verriegelungselemente 33 ausgeübte Querkraft in Richtung der Schwenkachse 23 keine Längsverlagerung des Verriegelungsbolzens 31 bewirkt. Der Verriegelungsbolzen 31 verdrängt die Verriegelungselemente 33 derart in die Verriegelungsaufnahme 38, dass die Formschlusskonturen 24, 25 parallel zur Schwenkachse 23 gegeneinander gespannt werden. Eine Federanordnung 41 hält den Verriegelungsbolzen 31 in seiner den Kupplungsarm 12 an dem Halter 11 verriegelnden Verriegelungsstellung oder Spannstellung. Die Federanordnung 41 enthält eine Schraubenfeder 42, die sich an einem Anschlag 43 in dem Führungskanal 32 sowie an einem Kopf 44 des Verriegelungsbolzens 31 abstützt.

Der Lagerkopf 22 ist zum Beispiel mit dem Lagerring 40 auf der Welle 21 gelagert.

Ein vorderer Abschnitt 54 des Verriegelungsbolzens 31 bzw. der Kopf 44 sind knochenartig ausgestaltet, so dass Schrägflächen 45 gebildet sind, die eine den Schrägflächen 37 entgegengesetzte Neigung aufweisen. Die Schrägflächen 45 sind den Entriegelungselementen 34 zugeordnet und dienen zu deren Verlagerung nach radial außen durch die Führungskanäle 36 hindurch. Wird die Verriegelungsanordnung 30 nämlich entriegelt, das heißt der Verriegelungsbolzen 31 in Richtung der Halteplatte 19 verlagert, drücken die Schrägflächen 45 die Entriegelungselemente 34 nach radial außen, wo sie in eine Entriegelungsaufnahme 46 eingreifen, beispielsweise eine weitere Ringnut 47 an dem Lagerring 40. Die Ringnuten 39, 47 haben jeweils Einlaufschrägen, wobei die Einlaufschräge der Ringnut 39 im Sinne eines Verspannens der Formschlusskonturen 24, 25 und die Einlaufschräge der Ringnut 47 im Sinne eines Lösens der Formschlusskonturen 24, 25 wirksam sind. Weitere Details der Verriegelungsanordnung 30 sind in der europäischen Patentanmeldung EP 1 475 253 A1 beschrieben.

Die Hohlwelle 29 ist an der Halteplatte beispielsweise mittels Schrauben 48 befestigt. Ein hinterer Abschnitt 49 der Hohlwelle 29 durchdringt eine Öffnung 50 der Halteplatte 19 und steht nach hinten vor dieselbe vor. An dem hinteren Abschnitt 49 ist ein Betätigungsorgan 51, beispielsweise ein Bowdenzug 52 zum Betätigen der Verriegelungsanordnung 30 angeschlossen. Mit dem Bowdenzug 52 ist der Verriegelungsbolzen 31 entgegen der Kraftwirkung der Schraubenfeder 42 in seine Entriegelungsstellung verlagerbar. Es versteht sich, dass der Verriegelungsbolzen 31 auch durch einen Antrieb, beispielsweise einen elektrischen Antrieb, längsverstellbar sein kann.

Zur Detektion, ob die Verriegelungsanordnung 30 in ihrer Entriegelungs- und/oder Verriegelungsstellung ist, dient ein Sensor 53, beispielsweise ein Drucksensor, ein Druckschalter, eine optischer Sensor oder dergleichen. Der Sensor 53 ist im Bereich eines vorderen Endes 54 des Verriegelungsbolzens 31 an der Hohlwelle 29 angeordnet. Der Sensor 53 wird beispielsweise von einem Verschlussdeckel 55 zum stirnseitigen Verschließen des Führungskanals 32 gehalten. Ein zweckmäßigerweise federnd an dem vorderen Ende 54 angeordneter Stößel 56 betätigt den Sensor 53, wenn der Verriegelungsbolzen 31 in seiner Verriegelungsstellung ist. Der Sensor 53 ist über eine Leitung 57 mit einer Überwachungseinrichtung 58 für die Anhängerkupplung 10 verbunden. Die Überwachungseinrichtung 58 enthält beispielsweise eine Kontrollleuchte, einen akustischen Signalgeber oder dergleichen, mit denen die korrekte Verriegelungsposition der Verriegelungsanordnung 30 signalisierbar ist. Zweckmäßigerweise ist auch ein Betätigungselement zur Betätigung des Bowdenzugs 52, z.B. ein Handgriff im Gepäckraum des Fahrzeugs 14, mit der Überwachungseinrichtung 58 gekoppelt, so dass diese eine Plausibilitätskontrolle durchführen kann. Nur wenn das Betätigungsorgan 51 unbetätigt ist und zugleich der Verriegelungsbolzen 31 in seiner Verriegelungsstellung ist, signalisiert die Überwachungseinrichtung 58 eine korrekte Verriegelung der Anhängerkupplung 10. Der Verschlussdeckel 55 und die Abdeckkappe 59 sind an die Hohlwelle 29 beispielsweise angeschraubt und/oder angeklipst.

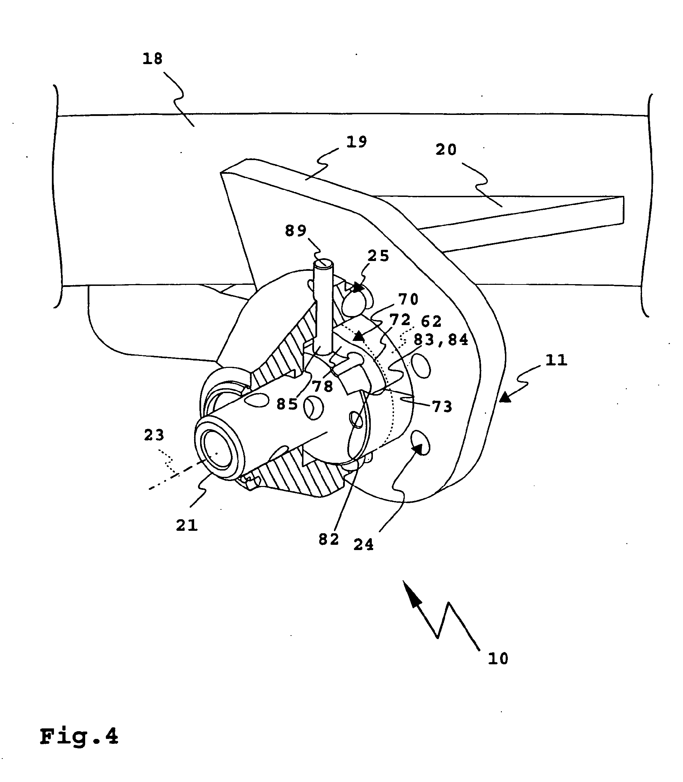

Die Welle 21 stützt sich mit einem Flansch 60, vorteilhafterweise einem Ringflansch, an der Halteplatte 19 ab. Die Bolzen oder Schrauben 48 durchdringen Bohrungen 61 an dem Flansch 60. Zwischen dem Flansch 60 und der Halteplatte 19 kann optional ein Distanzelement 62, z.B. ein Abstandsring, angeordnet sein, was in Figur 4 angedeutet ist.

Mit Hilfe einer Führungsanordnung 70 wird der Kupplungsarm 12 bezüglich des Halters 11 bei einer Dreh- oder Schwenkbewegung zwischen der Arbeitsstellung A und der Ruhestellung R axial in Richtung der Drehachse 23 geführt. Die Führungsanordnung 70 bewirkt eine Axialverstellung des Kupplungsarms 12 relativ zu dem Halter 11 parallel zur Drehachse 23, um die Formschlusskonturen 24, 25 bei diesem Schwenken außer Eingriff zu bringen und/oder außer Eingriff zu halten. Es versteht sich, dass nur eine dieser beiden Funktionen durch die Führungsanordnung 70 realisiert sein kann. Beispielsweise kann die Verriegelungsanordnung 30 die Formschlusskonturen 24, 25 außer Eingriff bringen. Bei einer anschließenden Schwenkbewegung des Kupplungsarms 12 hält die Führungsanordnung 70 die Formschlusskonturen 24, 25 außer Eingriff.

Ein Führungselement 71 der Führungsanordnung 70 gleitet auf einer Führungsbahn 72 einer Führungskulisse 73 der Führungsanordnung 70 entlang, um die Formschlusskonturen 24, 25 außer Eingriff zu bringen oder zu halten, wenn der Kupplungsarm 12 nicht die Arbeitsstellung A oder die Ruhestellung R einnimmt. Die Führungsbahn 72 ist an einer Stirnseite 64 des Flanschs 60 ausgebildet.

Das Führungselement 71 wird durch einen Bolzen 74 gebildet, der vor einen Innenumfang 63 des Lagerkopfes 22 im Bereich der Führungskulisse 73 vorsteht. Der Bolzen 74 durchdringt eine Radial-Bohrung 75 des Lagerkopfs 22.

Die Führungskulisse 73 ist beispielsweise eine Ausfräsung an dem Flansch 60. Die Führungsbahn 72 verläuft bezüglich der Formschlusskonturen 24, 25 abschnittsweise gekrümmt und abschnittsweise schräg.

Endabschnitte 76, 77 der Führungsbahn 72 weisen einen geringeren Abstand zu den halterseitigen Formschlusskonturen 24 auf als ein mittlerer Abschnitt 78. Der mittlere Abschnitt 78 bildet z.B. eine Art Hügel. Der mittlere Abschnitt 78 ist einer Zwischenstellung zwischen der Arbeitsstellung A und der Ruhestellung R des Kupplungsarm 12 zugeordnet, die Endabschnitte 76, 77 sind der Arbeitsstellung A bzw. der Ruhestellung R des Kupplungsarm 12 zugeordnet. Bei einer Schwenkbewegung von der Arbeitsstellung A in die Ruhestellung R oder umgekehrt gleitet eine Seitenfläche oder Umfangsfläche 79 des Bolzens 74 von den Endabschnitten 76, 77 über schräge Rampenabschnitte 80 der Führungsbahn 72 hinweg zu dem mittleren Abschnitt 78, so dass die Führungsanordnung 70 die Formschlusskonturen 24, 25 zwischen der Arbeitsstellung A und der Ruhestellung R entgegen der Selbstverriegelungswirkung der Verriegelungsanordnung 30 außer Eingriff hält.

Die Übergänge der von den flachen Endabschnitten 76, 77 zu den Rampen 80 bzw. von den Rampen 80 zum mittleren Abschnitt 78 sind vorliegend ausgerundet, was eine gleichmäßige Axialverstellung des Kupplungsarmes 12 bezüglich des Halters 11 bewirkt. Es versteht sich, dass auch winkelig ineinander übergehende Abschnitte eine erfindungsgemäßen Führungsbahn prinzipiell denkbar sind.

Die Endabschnitte 76, 77 sind vorliegend flache Abschnitte, das heißt für das Ausrücken der Formschlusskonturen 25 aus den Formschlusskonturen 24 ist die Verriegelungsanordnung 30 in ihrer Funktion als Entriegelungsanordnung zuständig. Es wäre aber denkbar, dass bei einer Verlagerung der Rampen 80 in Richtung der Endabschnitte 76, 77 die Führungsbahn 72 das axiale Verstellen des Kupplungsarms 12 im Sinne eines Ausrückens der Formschlusskonturen 25 aus den Formschlusskonturen 24 unterstützt, wenn der Kupplungsarm 12 aus der Arbeitsstellung A oder der Ruhestellung R heraus geschwenkt wird.

Die Führungskulisse 73 weist Drehendanschläge 81 für die Arbeitsstellung A und die Ruhestellung R auf. Die Drehendanschläge 81 sind durch Aufnahmen 82 gebildet, in die der Bolzen 74 in der jeweiligen Drehendstellung eingreift. Zweckmäßigerweise sind Innenwandungen der Aufnahmen 82 gerundet.

Der Führungsbahn 72 entgegengesetzte Innenflächen 84, die vorteilhafterweise Bestandteile der Aufnahmen 82 bilden, bilden Einrückkonturen 83, an denen eine Führungsgleitfläche 85 bei einer Schwenkbewegung des Kupplungsarms 12 entlang gleitet und eine Axialverschiebung im Sinne eines In-Eingriff-Bringens der Formschlusskonturen 24, 25 bewirkt. Die Führungsgleitfläche 85 wird vorliegend durch den Bolzen 74 gebildet. Die Einrückkontur 83 unterstützt die Verriegelungsanordnung 30 bei der Verriegelung des Kupplungsarms 12 im Sinne eines Verspannens der Formschlusskonturen 24, 25.

Es versteht sich, dass bei einer Ausgestaltung von erfindungsgemäßen Einrückkonturen, die ein Verspannen der Formschlusskonturen bewirkt, auch eine in Drehrichtung verriegelnde Verriegelungsanordnung zur Verriegelung eines Kupplungsarms an einem Halter vorgesehen sein kann.

Zwischen den Aufnahmen 82 ist die Führungsbahn 72 frei. Es ist aber denkbar, eine erfindungsgemäße Führungsbahn auch als eine Umfangsnut an einem Außenumfang einer Drehwelle für den Kupplungsarm oder einem Innenumfang eines an der Drehwelle drehbar gelagerten Ringteils auszugestalten.

Der Lagerkopf 22 verdeckt die Führungsanordnung 70, insbesondere die Führungskulisse 73, so dass diese vor Umwelteinflüssen geschützt sind. Der Flansch 60 und somit die Führungskulisse 73 greift in eine Ausnehmung 86 an der der Halteplatte 19 zugewandten Seite des Lagerkopfs 22 ein. Der Lagerkopf 22 überdeckt den Flansch 60 somit vollständig. Der Lagerkopf kann mit der Ausnehmung 86 an dem Flansch 60 gelagert sein.

An der Stirnseite 28 des Lagerkopf 22, zweckmäßigerweise an dessen Außenumfang, ist eine Dichtungsanordnung 87 mit einem eine Dichtlippe aufweisenden Dichtungsring 88 angeordnet. Der Dichtungsring 88 ist zumindest in der Arbeitsstellung A und der Ruhestellung R, vorteilhafterweise auch dazwischen, zwischen den Lagerkopf 22 und die Halteplatte 19 geklemmt, so dass die im Innern befindlichen Bauelemente, das heißt die Formschlusskonturen 24, 25 und die Führungsanordnung 70, vor Umwelteinflüssen geschützt sind.

Der Bolzen 74 steht nach außen vor den Lagerkopf 22 vor und bildet einen Mitnehmer 89 für ein schwenkbares Anbauteil 90. Das Anbauteil 90 ist beispielsweise ein schwenkbarer Träger 91 für einen nicht dargestellten elektrischen Anschlusskontakt zur elektrischen Stromversorgung des ebenfalls nicht dargestellten Anhängers. Der Träger 91 ist an einem Halter 92 schwenkbar gelagert, der vor die Halteplatte 19 vorsteht. Der Mitnehmer 89 betätigt einen Betätigungsvorsprung 93 des Schwenk-Trägers 91. Beim Schwenken des Kupplungsarms 12 in Richtung der Ruhestellung R betätigt der Mitnehmer 89 somit den Schwenk-Träger 91 in Richtung einer Ruhestellung, bei der der nicht dargestellte Anschlusskontakt in einen geschützten Bereich unterhalb der Karosserie 17 geschwenkt wird. Ein zweiter Mitnehmer 94 am Lagerkopf 22 betätigt den Betätigungsvorsprung 93 in umgekehrter Schwenkrichtung.

## Patentansprüche

1. Anhängerkupplung für ein Kraftfahrzeug (14) mit einem Kupplungsarm (12), der an seinem freien Ende (16) ein Kopfstück (15) zum lösbaren Befestigen eines Anhängers trägt und einen Lagerkopf (22) aufweist, der an einem an dem Kraftfahrzeug (14) befestigbaren oder befestigten Schwenk-Halter (11) um eine Schwenkachse (23) schwenkbar zwischen einer Ruhestellung (R) und einer Arbeitsstellung (A) gelagert ist, bei der der Kupplungsarm (12) nach hinten vor das Kraftfahrzeug (14) zum Anhängen des Anhängers vorsteht, wobei der Kupplungsarm (12) zumindest in der Arbeitsstellung (A) bezüglich des Halters (11) mittels Formschlusskonturen (24, 25) an dem Halter (11) und an dem Kupplungsarm (12) drehfest festlegbar ist, wobei der Kupplungsarm (12) in Richtung der Schwenkachse (23) axial verschieblich ist, um die Formschlusskonturen (24, 25) außer Eingriff oder in Eingriff zu bringen, **dadurch gekennzeichnet, dass** sie eine Führungsanordnung (70) mit einer Führungskulisse (73) mit mindestens einer sich in Schwenkrichtung erstreckenden und bezüglich der Formschlusskonturen (24, 25) abschnittsweise schräg verlaufenden Führungsbahn (72) und mindestens ein Führungselement (71) aufweist, das auf der mindestens einen Führungsbahn (72) entlang gleitet, um die Formschlusskonturen (24, 25) bei einem Schwenken aus der Arbeitsstellung (A) und/oder aus der Ruhestellung (R) durch eine Relativverschiebung parallel zu der Schwenkachse (23) im Sinne eines Entfernens der Formschlusskonturen (24, 25) außer Eingriff zu bringen und/oder außerhalb zumindest der Arbeitsstellung (A) außer Eingriff zu halten.

2. Anhängerkupplung nach Anspruch 1, **dadurch gekennzeichnet, dass** die Führungsanordnung (70) den Lagerkopf (22) des Kupplungsarms bei einem Schwenken aus der Arbeitsstellung (A) und/oder aus der Ruhestellung (R) relativ zu dem Halter (11) führt.

3. Anhängerkupplung nach Anspruch 1 oder 2, **dadurch gekennzeichnet, dass** die Führungsbahn (72) abschnittsweise gekrümmt ist.

4. Anhängerkupplung nach einem der vorhergehenden Ansprüche, **dadurch gekennzeichnet, dass** die Führungsanordnung (70) mindestens eine der Arbeitsstellung (A) oder der Ruhestellung (R) zugeordnete Einrückkontur (83) aufweist, an der eine Führungsgleitfläche (85) bei einer Schwenkbewegung des Kupplungsarms (12) entlang geleitet und bei einem Schwenken des Kupplungsarms (12) in die Arbeitsstellung (A) und/oder die Ruhestellung (R) eine Axialverschiebung des Kupplungsarms (12) im Sinne eines In-Eingriff-Bringens der Formschlusskonturen (24, 25) bewirkt.

5. Anhängerkupplung nach Anspruch 4, **dadurch gekennzeichnet, dass** die Führungsgleitfläche (85) an dem mindestens einen Führungselement (71) angeordnet ist, und dass die mindestens eine Einrückkontur (83) eine der mindestens einen Führungsbahn (72) gegenüberliegende Fläche (84) der Führungskulisse (73) ist.

6. Anhängerkupplung nach einem der vorhergehenden Ansprüche, **dadurch gekennzeichnet, dass** an mindestens einem Endbereich der Führungskulisse (73) ein Drehendanschlag (81) zum Begrenzen einer Schwenkbewegung des Kupplungsarms (12) bei einem Schwenken in die Arbeitsstellung (A) und/oder die Ruhestellung (R) vorhanden ist.

7. Anhängerkupplung nach Anspruch 6, **dadurch gekennzeichnet, dass** die Führungskulisse (73) bei dem mindestens einen Drehendanschlag (81) ein maulartige Aufnahme (82) für das mindestens eine Führungselement (71) aufweist.

8. Anhängerkupplung nach einem der vorhergehenden Ansprüche, **dadurch gekennzeichnet, dass** mindestens ein mittlerer Abschnitt (78) der Führungsbahn (72) relativ zu den Formschlusskonturen (24, 25) des Halters (11) erhöht oder des Kupplungsarms (12) verringert ist.

9. Anhängerkupplung nach einem der vorhergehenden Ansprüche, **dadurch gekennzeichnet, dass** die Führungskulisse (73) an dem Halter (11) und das mindestens eine Führungselement (71) an dem an dem Halter (11) drehbar gelagerten Lagerkopf (22) des Kupplungsarms (12) angeordnet sind oder umgekehrt.

10. Anhängerkupplung nach einem der vorhergehenden Ansprüche, **dadurch gekennzeichnet, dass** das mindestens eine Führungselement (71) durch einen Bolzen (74) gebildet ist, der an dem Lagerkopf (22) oder an dem Halter (11) quer zu der Schwenkachse (23) festgelegt ist.

11. Anhängerkupplung nach Anspruch 10, **dadurch gekennzeichnet, dass** ein Ende des Bolzens (74) vor den Lagerkopf (22) vorsteht und einen Mitnehmer (89) für ein schwenkbares Anbauteil (90) der Anhängerkupplung (10), insbesondere eine schwenkbare elektrische Steckkontaktanordnung, bildet, so dass der Mitnehmer (89) bei einer Schwenkbewegung des Kupplungsarms (12) das Anbauteil (90) in Richtung der Arbeitsstellung (A) und/oder der Ruhestellung (R) mitnimmt.

12. Anhängerkupplung nach einem der vorhergehenden Ansprüche, **dadurch gekennzeichnet, dass** die Führungsanordnung (70), insbesondere die Führungskulisse (73), durch den Lagerkopf (22) verdeckt ist.

13. Anhängerkupplung nach einem der vorhergehenden Ansprüche, **dadurch gekennzeichnet, dass** sie eine Dichtungsanordnung (87) zu Abdichten der Führungsanordnung (70) gegenüber Umwelteinflüssen aufweist.

14. Anhängerkupplung nach Anspruch 14, **dadurch gekennzeichnet, dass** die Dichtungsanordnung (87) einen Dichtungsring (88) zwischen dem Lagerkopf (22) und einer der Stirnseite (28) des Lagerkopfs (22) gegenüberliegenden Fläche (65) des Halters (11) umfasst.

15. Anhängerkupplung nach einem der vorhergehenden Ansprüche, **dadurch gekennzeichnet, dass** die Führungsanordnung (70) durch von einer Verriegelungsanordnung (30) zum drehfesten und/oder axialen Verriegeln des Kupplungsarms (12) an dem Halter (11) zumindest in der Arbeitsstellung (A) separate Bauteile gebildet ist.

16. Anhängerkupplung nach einem der vorhergehenden Ansprüche, **dadurch gekennzeichnet, dass** die mindestens eine Führungsbahn (72) an einer Welle (21) angeordnet ist, an der der Lagerkopf (22) des Kupplungsarms (12) drehbar gelagert ist.

17. Anhängerkupplung nach Anspruch 16, **dadurch gekennzeichnet, dass** die mindestens eine Führungsbahn (72) an einer Stirnseite (64) eines Flansches oder an einem Außenumfang der Welle (21) angeordnet ist.

18. Anhängerkupplung nach Anspruch 16 oder 17, **dadurch gekennzeichnet, dass** die Welle (21) eine Hohlwelle (29) ist, in der die Verriegelungsanordnung zumindest in der Arbeitsstellung (A) zumindest teilweise aufgenommen ist.

19. Anhängerkupplung nach Anspruch 18, **dadurch gekennzeichnet, dass** die Hohlwelle (29) radiale Führungskanäle (35) aufweist, in denen Verriegelungselemente (33), insbesondere Kugeln, verschieblich sind, und dass ein in der Hohlwelle (29) längsverschieblich gelagerter Verriegelungsbolzen (31) die Verriegelungselemente (33) nach radial außen in Verriegelungsaufnahmen (38) an dem Kupplungsarm (12) hinein in eine Verriegelungsstellung verdrängt.

20. Anhängerkupplung nach einem der vorhergehenden Ansprüche, **dadurch gekennzeichnet, dass** eine Federanordnung (41) das mindestens eine Führungselement (71) in Kontakt mit der mindestens einen Führungsbahn (72) hält.

## Claims

1. Trailer coupling for a motor vehicle (14) with a coupling arm (12) which at its free end (16) carries a head section (15) for the releasable fastening of a trailer, and has a bearing head (22) mounted pivotably on a swivel holder (11) attachable or attached to the motor vehicle (14) between an idle position (R) and an operating position (A) in which the coupling arm (12) extends to the rear from the motor vehicle (14) for attachment of the trailer, wherein the coupling arm (12), at least in the operating position (A), with reference to the holder (11), is non-rotatably attachable to the holder (11) and the coupling arm (12) by means of engagement contours (24, 25), wherein the coupling arm (12) is axially movable in the direction of the swivel axis (23) in order to bring the engagement contours (24, 25) out of or into engagement, **characterised in that** it has a guide assembly (70) with a guide slotted link (73) with at least one guide track (72) extending in the direction of swivel and running in sections at an angle relative to the engagement contours (24, 25), and with at least one guide element (71) which slides along the guide track or tracks (72) to bring the engagement contours (24, 25), in swivelling from the operating position (A) and/or from the idle position (R) through relative displacement parallel to the swivel axis (23) for the purpose of removing the engagement contours (24, 25), out of engagement and/or to hold them out of engagement at least outside the operating position (A).

2. Trailer coupling according to claim 1, **characterised in that** the guide assembly (70) guides the bearing head (22) of the coupling arm relative to the holder (11) when swivelling from the operating position (A) and/or from the idle position (R).

3. Trailer coupling according to claim 1 or 2, **characterised in that** the guide track (72) is curved in sections.

4. Trailer coupling according to any of the preceding claims, **characterised in that** the guide assembly (70) has at least one engaging contour (83) assigned to the operating position (A) or the idle position (R), on which a guide sliding surface (85) slides along during a swivelling movement of the coupling arm (12) and effects an axial displacement of the coupling arm (12) for the purpose of bringing the engagement contours (24, 25) into engagement, during swivelling of the coupling arm (12) into the operating position (A) and/or the idle position (R).

5. Trailer coupling according to claim 4, **characterised in that** the guide sliding surface (85) is provided on the guide element or elements (71), and that the engaging contour or contours (83) is/are a surface (84) of the guide slotted link (73) opposite the guide track or one of the guide tracks (72).

6. Trailer coupling according to any of the preceding claims, **characterised in that** there is provided on at least one end section of the guide slotted link (73) a rotary end stop (81) to limit a swivelling movement of the coupling arm (12) when swivelling into the operating position (A) and/or the idle position (R).

7. Trailer coupling according to claim 6, **characterised in that** the guide slotted link (73) has at the rotary end stop or stops (81) a jaw-like housing (82) for the guide element or elements (71).

8. Trailer coupling according to any of the preceding claims, **characterised in that** at least one central section (78) of the guide track (72) is raised relative to the engagement contours (24, 25) of the holder (11) or lowered relative to the engagement contours of the coupling arm (12).

9. Trailer coupling according to any of the preceding claims, **characterised in that** the guide slotted link (73) is mounted on the holder (11), and the guide element or elements (71) are mounted on the bearing head (22) of the coupling arm (12) rotatably mounted on the holder (11), or vice-versa.

10. Trailer coupling according to any of the preceding claims, **characterised in that** one or more of the guide elements (71) is formed by a pin (74), which is fixed to the bearing head (22) or the holder (11) at right-angles to the swivel axis (23).

11. Trailer coupling according to claim 10, **characterised in that** one end of the pin (74) protrudes in front of the bearing head (22) to form a driver (89) for a pivotable attachment (90) of the trailer coupling (10), in particular a pivotable electrical plug contact assembly, so that the driver (89), during a swivelling movement of the coupling arm (12), drives the attachment (90) towards the operating position (A) and/or the idle position (R).

12. Trailer coupling according to any of the preceding claims, **characterised in that** the guide assembly (70), in particular the guide slotted link (73), is covered by the bearing head (22).

13. Trailer coupling according to any of the preceding claims, **characterised in that** it has a seal assembly (87) for sealing the guide assembly (70) from the effects of the environment.

14. Trailer coupling according to claim 13, **characterised in that** the seal assembly (87) comprises a seal ring (88) between the bearing head (22) and a surface (65) of the holder (11) opposite the end face (28) of the bearing head (22).

15. Trailer coupling according to any of the preceding claims, **characterised in that** the guide assembly (70) is formed by separate components of a locking assembly (30) for the non-rotatable and/or axial locking of the coupling arm (12) to the holder (11), at least in the operating position (A).

16. Trailer coupling according to any of the preceding claims, **characterised in that** the guide track or tracks (72) is/are fitted to a shaft (21), on which the bearing head (22) of the coupling arm (12) is rotatably mounted.

17. Trailer coupling according to claim 16, **characterised in that** the guide track or tracks (72) is/are fitted to an end face (64) of a flange or to an outer periphery of the shaft (21).

18. Trailer coupling according to claim 16 or 17, **characterised in that** the shaft (21) is a hollow shaft (29), in which the locking assembly is at least partly accommodated, at least in the operating position (A).

19. Trailer coupling according to claim 18, **characterised in that** the hollow shaft (29) has radial guide channels (35) in which locking elements (33), in particular balls, are able to slide, and that a locking pin (31) mounted in the hollow shaft (29) and able to slide longitudinally displaces the locking elements (33) radially outwards into a locking position in locking locations (38) on the coupling arm (12).

20. Trailer coupling according to any of the preceding claims, **characterised in that** it has a spring assembly (41) holding one or more guide elements (71) in contact with one or more guide tracks (72).

## Revendications

1. Dispositif d'attelage pour un véhicule automobile (14), avec un bras d'attelage (12) qui porte à son extrémité libre (16) un élément formant tête (15) pour la fixation amovible d'une remorque et présente une tête de soutien (22) qui est montée sur un support pivotant (11) fixable ou fixé au véhicule automobile (14) de façon pivotante autour d'un axe de pivotement (23) entre une position de repos (R) et une position de travail (A), dans laquelle le bras d'attelage (12) dépasse du véhicule (14) vers l'arrière pour accrocher la remorque, dans lequel le bras d'attelage (12) peut être fixé de manière immobile en rotation au moins dans la position de travail (A) par rapport au support (12) au moyen de contours d'engagement positif (24, 25) sur le support (11) et le bras d'attelage (12), dans lequel le bras d'attelage (12) est mobile axialement dans la direction de l'axe de pivotement (23) afin de mettre les contours d'engagement positif (24, 25) en prise et hors de prise, **caractérisé en ce qu'**il présente un ensemble de guidage (70) avec une coulisse de guidage (73) comportant au moins une voie de guidage (72) s'étendant dans la direction de pivotement et par sections à l'oblique par rapport aux contours d'engagement positif (24, 25) et au moins un élément de guidage (71) qui glisse le long de la voie de guidage (72) au nombre d'au moins une afin de mettre les contours d'engagement positif (24, 25) hors de prise lors d'un pivotement depuis la position de travail (A) et/ou depuis la position de repos (R) par un déplacement relatif parallèlement à l'axe de pivotement (23) au sens d'un éloignement des contours d'engagement positif (24, 25) et/ou de les maintenir hors de prise à l'extérieur au moins de la position de travail (A).

2. Dispositif d'attelage selon la revendication 1, **caractérisé en ce que** l'ensemble de guidage (70) guide la tête de soutien (22) du bras d'attelage lors d'un pivotement depuis la position de travail (A) et/ou depuis la position de repos (R) relativement au support (11).

3. Dispositif d'attelage selon la revendication 1 ou 2, **caractérisé en ce que** la voie de guidage (72) est incurvée par sections.

4. Dispositif d'attelage selon l'une des revendications précédentes, **caractérisé en ce que** l'ensemble de guidage (70) présente au moins un contour de retrait (83) associé à la position de travail (A) ou à la position de repos (R), le long duquel une surface de glissement de guidage (85) glisse lors d'un mouvement de pivotement du bras d'attelage (12) et, lors d'un pivotement du bras d'attelage (12) vers la position de travail (A) et/ou la position de repos (R), provoque un déplacement axial du bras d'attelage (12) au sens d'une mise en prise des contours d'engagement positif (24, 25).

5. Dispositif d'attelage selon la revendication 4, **caractérisé en ce que** la surface de glissement de guidage (85) est placée sur l'élément de guidage (71) au nombre d'au moins un, et **en ce que** le contour de retrait (83) au nombre d'au moins un est une surface (84) de la coulisse de guidage (73) opposée à la voie de guidage (72) au nombre d'au moins un.

6. Dispositif d'attelage selon l'une des revendications précédentes, **caractérisé en ce que** sur au moins une zone d'extrémité de la coulisse de guidage (73), il est prévu une butée de fin de rotation (81) pour limiter un mouvement de pivotement du bras d'attelage (12) lors d'un pivotement vers la position de travail (A) et/ou la position de repos (R).

7. Dispositif d'attelage selon la revendication 6, **caractérisé en ce que** la coulisse de guidage (73) présente, au niveau de la butée de fin de rotation (81) au nombre d'au moins un, un logement (82) en forme de bouche pour l'élément de guidage (71) au nombre d'au moins un.

8. Dispositif d'attelage selon l'une des revendications précédentes, **caractérisé en ce qu'**au moins une section médiane (78) de la voie de guidage (72) est augmentée par rapport aux contours d'engagement positif (24, 25) du support (11) ou réduite par rapport à ceux du bras d'attelage (12).

9. Dispositif d'attelage selon l'une des revendications précédentes, **caractérisé en ce que** la coulisse de guidage (73) est placée sur le support (11) et l'élément de guidage (71) au nombre d'au moins un sur la tête de soutien (22) du bras d'attelage (12) montée rotative sur le support (11), ou inversement.

10. Dispositif d'attelage selon l'une des revendications précédentes, **caractérisé en ce que** l'élément de guidage (71) au nombre d'au moins un est formé par un goujon (74) qui est fixé sur la tête de soutien (22) ou sur le support (11) transversalement à l'axe de pivotement (23).

11. Dispositif d'attelage selon la revendication 10, **caractérisé en ce qu'**une extrémité du goujon (74) dépasse de la tête de soutien (22) et forme un coulisseau (89) pour une partie rapportée pivotante (90) du dispositif d'attelage (10), en particulier un système de contact électrique à fiche pivotant, de sorte que le coulisseau (89) entraîne la partie rapportée (90) en direction de la position de travail (A) et/ou de la position de repos (R) lors d'un mouvement de pivotement du bras d'attelage (12).

12. Dispositif d'attelage selon l'une des revendications précédentes, **caractérisé en ce que** l'ensemble de guidage (70), en particulier la coulisse de guidage (73), est caché par la tête de soutien (22).

13. Dispositif d'attelage selon l'une des revendications précédentes, **caractérisé en ce qu'**il présente un système de joint (87) pour rendre hermétique l'ensemble de guidage (70) par rapport aux effets extérieurs.

14. Dispositif d'attelage selon la revendication 13, **caractérisé en ce que** le système de joint (87) comprend une bague d'étanchéité (88) entre la tête de soutien (22) et une surface (65) du support (11) opposée à la face frontale (28) de la tête de soutien (22).

15. Dispositif d'attelage selon l'une des revendications précédentes, **caractérisé en ce que** l'ensemble de guidage (70) est formé par des pièces séparées par un ensemble de verrouillage (39) destiné à verrouiller en rotation et/ou axialement le bras d'attelage (12) sur le support (11) au moins dans la position de travail (A).

16. Dispositif d'attelage selon l'une des revendications précédentes, **caractérisé en ce que** la voie de guidage (72) au nombre d'au moins une est placée sur un arbre (21) sur lequel la tête de soutien (22) du bras d'attelage (12) est montée rotative.

17. Dispositif d'attelage selon la revendication 16, **caractérisé en ce que** la voie de guidage (72) au nombre d'au moins une est placée sur une face frontale (64) d'une bride ou sur une circonférence extérieure de l'arbre (21).

18. Dispositif d'attelage selon la revendication 16 ou 17, **caractérisé en ce que** l'arbre (21) est un arbre creux (22) dans lequel l'ensemble de verrouillage est logé au moins partiellement au moins dans la position de travail (A).

19. Dispositif d'attelage selon la revendication 18, **caractérisé en ce que** l'arbre creux (29) présente des canaux radiaux de guidage (35) dans lesquels des éléments de verrouillage (33), en particulier des billes, peuvent se déplacer, et **en ce qu'**un goujon de verrouillage (31) monté mobile longitudinalement dans l'arbre creux (29) repousse les éléments de verrouillage (33) radialement vers l'extérieur dans des logements de verrouillage (38) prévus sur le bras d'attelage (12), en direction d'une position de verrouillage.

20. Dispositif d'attelage selon l'une des revendications précédentes, **caractérisé en ce qu'**un système à ressort (41) tient l'élément de guidage (71) au nombre d'au moins un en contact avec la voie de guidage (72) au nombre d'au moins un.
